# EUROPÄISCHE PATENTSCHRIFT

(11) **EP 2 765 319 B1**
(45) Veröffentlichungstag und Bekanntmachung des Hinweises auf die Patenterteilung: **03.04.2019**
(21) Anmeldenummer: 14154373.6
(22) Anmeldetag: 07.02.2014
(51) Int. Cl.: F16C 33/20, F16C 33/12, F16C 33/14, B22F 7/08, C22C 26/00

(54) **Gleitlagerverbundwerkstoff und hieraus hergestelltes Gleitlagerelement**
Friction bearing compound material and friction bearing element made of the same
Matériau composite pour palier lisse et élément de palier lisse fabriqué avec celui-ci

(30) Priorität: 08.02.2013 DE 102013202123
(43) Veröffentlichungstag der Anmeldung: 13.08.2014
(73) Patentinhaber: KS Gleitlager GmbH, 68789 St. Leon-Rot (DE)
(72) Erfinder: Cieslik, Franz, 39117 Heidelberg (DE); Reinicke, Rolf, Dr., 76669 Bad Schönborn (DE)
(74) Vertreter: DREISS Patentanwälte PartG mbB

(56) Entgegenhaltungen:
- CN-A- 101 219 476
- CN-A- 101 788 015
- DE-A1-102008 056 750
- DE-A1-102009 043 435
- DE-A1-102012 205 606
- US-A1- 2005 052 088
- US-A1- 2007 025 652

## Beschreibung

Die Erfindung betrifft einen Metall/Kunststoff-Gleitlagerverbundwerkstoff mit einer metallischen Stützschicht, insbesondere aus Stahl, mit einer porösen aus metallischen Partikeln aufgesinterten Trägerschicht, und mit einem die Poren der Trägerschicht ausfüllenden Gleitschichtmaterial auf Basis fluorfreier Thermoplaste, insbesondere PPA, LCP, PEEK, PPS, PEI, PI, und mit die tribologischen Eigenschaften verbessernden Füllstoffen.

Vorstehend genannte Gleitlagerverbundwerkstoffe sind, insbesondere zur Herstellung von Gleitlagerelementen im Automobilbereich, bekannt geworden. Bei derartigen Gleitlagerverbundwerkstoffe übernimmt die matrixbildende Polymerkomponente des Gleitschichtmaterials nicht nur eine die Füllstoffe haltende Funktion und eine schmierende Funktion sondern zugleich eine tragende Funktion für den Gleitpartner. wobei zur Erhöhung der Verschleißfestigkeit des Verbundwerkstoffs in großem Umfang Füllstoffe und Füllstoffgemische bekannt geworden sind.

Wenn vorausgehend von einer Basis des Gleitschichtmaterials die Rede ist, so bedeutet dies nicht, dass die betreffende matrixbildende Komponente des Gleitschichtmaterials zu 100 % aus dem jeweiligen Polymer bestehen muss, sondern es können auch weitere matrixbildende Polymere enthalten sein, sofern das betreffende die Matrix bildende Polymer wenigstens 75 Gew.-%, insbesondere wenigstens 80 Gew.-%, insbesondere wenigstens 90 Gew.-%, insbesondere wenigstens 95 Gew.-% der Polymerkomponente ausmacht. Vorzugsweise besteht die matrixbildende Polymerkomponente jedoch zu 100 % aus einem der betreffenden Polymere.

Wie erwähnt werden zur Verbesserung der tribologischen Eigenschaften, insbesondere Erhöhung der Verschleißfestigkeit und/oder Reduzierung des Reibwerts, dem Gleitschichtmaterial Füllstoffe zugesetzt. DE 10 2009 043 435 A1 zeigt einen gattungsfremden Gleitlack, bei dem nicht näher spezifizierte Kohlenstoffnanoröhrchen als Verschleißschutzstoff neben einer Vielzahl anderer Verschleißschutzstoffe und Schmierstoffe genannt sind. DE 10 2012 205 606 A1 beschreibt Kohlenstofffasern als Verstärkungsfasern in einem PTFE basierten und Festschmierstoffe aufweisenden Gleitschichtmaterial. Auch CN 101788015 A offenbart und lehrt einen Metall/Kunststoff-Gleitlagerverbundwerkstoff mit einer metallischen Stützschicht aus Stahl, einer porösen Trägerschicht aus Bronze und mit einem die Poren der Trägerschicht ausfüllenden Gleitschichtmaterial. Das Gleitschichtmaterial soll ein Fluorpolymer sein. Schließlich soll eine als Oberflächenschicht bezeichnete Verbundschicht aus einem mit demselben polymeren Gleitschichtmaterial gefüllten Flächengebilde auf die bereits befüllte Bronzeschicht aufgebracht werden. Durch diese zusätzliche Oberflächenschicht, also das gefüllte Flächengebilde soll die Verschleißbeständigkeit gegenüber einem Werkstoff, der lediglich eine mit PTFE gefüllte Bronzeschicht aufweist, verbessert werden. Das Gleitschichtmaterial kann dabei Füllstoffe umfassen, wobei neben anderen eine Mehrzahl von Nanometermaterialien, darunter auch Kohlenstoffnanoröhrchen genannt sind. US 2007/00225652 A1 lehrt die Verwendung von Kohlenstoffnanomaterial zur Erzielung einer elektrischen Leitfähigkeit bei Gehäusen von gekapselten Lagern. Es sind einwandige und mehrwandige und "cup-stacked" Kohlenstoffnanoröhrchen genannt.

Der vorliegenden Erfindung liegt die Aufgabe zugrunde, einen Metall/Kunststoff-Gleitlagerverbundwerkstoff zu schaffen, der wirtschaftlich herstellbar ist und gegenüber bekannten Werkstoffen eine noch optimalere Zusammensetzung im Hinblick auf den an sich stets gegebenen Zielkonflikt der Realisierung eines möglichst geringen Reibwerts und einer hohen Verschleißfestigkeit aufweist.

Diese Aufgabe wird durch einen Gleitlagerverbundwerkstoff mit den Merkmalen des Anspruchs 1 gelöst.

Es wurde in überraschender Weise festgestellt, dass die Zugabe von Kohlenstoff-Nanoröhrchen der genannten Art nicht nur die Verschleißfestigkeit und sonstige mechanische Kennwerte des Gleitlagerverbundwerkstoffs erhöht bzw. positiv beeinflusst, sondern zugleich den Reibwert herabsetzt. Es wird diesseits vermutet, dass mehrwandige Kohlenstoff-Nanoröhrchen eine gewisse Verschieblichkeit der Schichten innerhalb der Wandung zulassen - wie teleskopierende ineinandergeschobene Zylinder - was sich auf die tribologischen Eigenschaften des entstehenden Verbundwerkstoffs positiv auswirkt. Des Weiteren wird vermutet, dass sich die mehrwandigen Kohlenstoff-Nanoröhrchen aufgrund ihres viel geringeren Volumens gegenüber typischen Kohlenstofffasern mit Durchmessern von 3-5 µm und Längen von 100-1000 µm viel homogener im Gleitschichtmaterial verteilen. Dies bedeutet, dass gewissermaßen in jedem noch so kleinen Volumen des Gleitschichtmaterials stets Kohlenstoff-Nanoröhrchen anzutreffen sind.

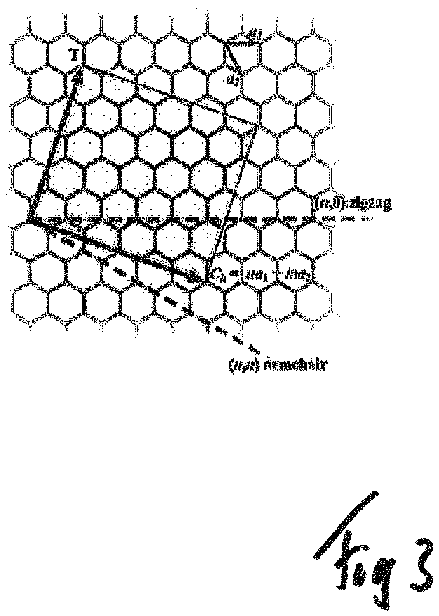

Kohlenstoff-Nanoröhrchen wurden Anfang der 90er Jahre entdeckt; es handelt sich um konzentrische rohr- oder rohrförmige Gebilde aus Graphit bzw. Kohlenstoffatomen. Die Rohrwandungen oder Röhrchen sind dabei gewissermaßen von in Zylinderform aufgerollten Flächengebilden aus ebenen einatomigen hexagonalen wabenartigen Lagen aus Kohlenstoffatomen gebildet. Die mehrwandigen Kohlenstoff-Nanoröhrchen haben dabei zwischen 2 und 20 zylindrische Rohrwandungen oder -schichten solcher Lagen. Innerhalb der Rohrstruktur ist der radiale Abstand der Lagen voneinander ungefähr im Bereich von 0,3 - 0,4 nm und entspricht ungefähr dem 1,5-fachen des Betrags des Einheitsvektors der hexagonalen Struktur. Die Wickelachse oder Zylinderachse der Rohrstruktur steht senkrecht auf der kreisförmigen Umfangslinie. Die kreisförmige Umfangslinie in ebene Form wieder ausgerollt beschreibt als Vektor über Indizes n, m die Orientierung der Rohrwicklung in Bezug auf die hexagonale Wabenstruktur bzw. in Bezug auf deren Einheitsvektoren. Man identifiziert hierbei wie in Fig.3 angedeutet eine Wicklung mit n=m, die als arm chair bezeichnet wird, und eine Wicklung mit n, m=0, die als zig-zag bezeichnet wird, und Wicklungen mit beliebigem n,m, die als chiral bezeichnet werden. Diese Wicklungen arm chair, zig-zag und chiral werden bevorzugt, da sie eine gleichmäßige spannungsarme und damit verzerrungsfreie Röhrenbildung erlauben. Am geeignetsten ist arm chair. Vorzugsweise haben alle Wandungen der mehrwandigen Kohlenstoff-Nanoröhrchen dieselbe durch n und m beschriebene Wicklungsrichtung.

In Weiterbildung der Erfindung erweist es sich als vorteilhaft, wenn der Röhrenaußendurchmesser der Kohlenstoff-Nanoröhrchen ≤ 70 nm, insbesondere ≤ 60 nm, insbesondere ≤ 50 nm ist. Weiter erweist es sich als vorteilhaft, wenn die Röhrenlänge der Kohlenstoff-Nanoröhrchen ≤ 5 µm, insbesondere ≤ 3 µm, insbesondere ≤ 2 µm ist.

Des Weiteren erweist es sich als vorteilhaft, wenn das Gleitschichtmaterial zu 0,1 - 12 Masse-%, insbesondere zu 0,5 - 10 Masse-%, insbesondere zu 1 - 8 Masse-% Kohlenstoff-Nanoröhrchen umfasst.

Es wurde des Weiteren festgestellt, dass eine Orientierung der Kohlenstoff-Nanoröhrchen in Richtung der gleitenden Beanspruchung weitere Vorteile hinsichtlich einer Reduzierung bzw. Niedrighaltung des Reibwerts mit sich bringt.

Es erweist sich als vorteilhaft, wenn das Gleitschichtmaterial aus PEEK- oder PPA-Basis ausgebildet ist.

Weiter kann es sich als vorteilhaft erweisen, wenn das Gleitschichtmaterial zu 1 - 40 Masse-%, insbesondere zu 1 - 30 Masse -%, insbesondere 1 - 25 Masse -%, insbesondere 5 - 25 Masse -%, insbesondere 10 - 25 Masse -% weitere Füllstoffe (neben Kohlenstoff-Nanoröhrchen) umfasst.

Als weitere Füllstoffe kommen in Frage: Verstärkungsstoffe, wie insbesondere C-Fasern, Glasfasern, Polyamidfasern (Aramid); Festschmierstoffe, wie insbesondere PTFE, ZnS, BaSO₄, Graphit, Ruß, hexagonales Bornitrid; Metallsulfide, wie MoS₂, SnS₂,WS₂; Kunststoffpartikel, wie insbesondere Aramid (PPTA)-, PPSO₂-, PI- und PAI-Partikel, Polyarcylatpartikel (PAR), PBA, PBI; Metalloxide, wie insbesondere Fe₂O₃, Al₂O₃, SiO₂, TiO₂, CuO, MgO, ZnO; Hartstoffe (keramische Partikel), wie insbesondere SiC, Si₃N₄, BC, kubisches Bornitrid; Fluoride, wie insbesondere CaF₂, NaF, AlF₃; Schichtsilikate, wie insbesondere Kaolin, Glimmer, Wollastonit, Talk, Kieselsäure; metallische Feinpulver, wie insbesondere Bronze und Wismut; und Pigmente, wie insbesondere Mischphasenoxidpigmente, nämlich Co-Al, Cr-Sb-Ti, Co-Ti, Fe-Al oder Co-Cr.

Als besonders zweckmäßig hat es sich erwiesen, wenn die weiteren Füllstoffe Verstärkungsstoffe, insbesondere Kohlenstoff-Fasern, umfassen.

Des Weiteren hat es sich als vorteilhaft erwiesen, wenn die weiteren Füllstoffe Festschmierstoffe, insbesondere Graphit oder hexagonales Bornitrid, umfassen.

Des Weiteren hat es sich als vorteilhaft erwiesen, wenn die weiteren Füllstoffe Metallsulfide, insbesondere MoS₂ oder ZnS, umfassen.

Des Weiteren hat es sich als vorteilhaft erwiesen, wenn das Gleitschichtmaterial auf PEEK- oder PPA-Basis ausgebildet ist.

Zur Herstellung des erfindungsgemäßen Gleitlagerverbundwerkstoffs wird das Gleitschichtmaterial mit seinen Füllstoffen erfindungsgemäß in ein folienartiges Flachmaterial extrudiert, und dieses Flachmaterial wird in die Poren der porösen Trägerschicht einimprägniert, wobei hierfür ein kontinuierlicher Walzvorgang eingesetzt wird. Durch das Einimprägnieren des Gleitschichtmaterials in die Poren der porösen Trägerschicht kann eine Orientierung der Kohlenstoff-Nanoröhrchen in einer Vorzugsrichtung erreicht werden.

Des Weiteren wird Schutz beansprucht für ein Gleitlagerelement, hergestellt aus einem Gleitlagerverbundwerkstoff, insbesondere in einem Roll-Biege-Umformprozess oder in einem Tiefziehprozess. Bei derartigen Gleitelementen handelt es sich also typischerweise um gerollte zylindrische Buchsen oder um halbschalenförmige Gleitlagerelemente. Auch Bundbuchsen oder Topfbuchsen oder ebene oder sphärische Gleitlagerelemente sind denkbar.

Weitere Einzelheiten, Merkmale und Vorteile der Erfindung ergeben sich aus den beigefügten Patentansprüchen und der nachfolgenden Beschreibung und zeichnerischen Darstellung bevorzugter Ausführungsformen der Erfindung.

In der Zeichnung zeigt:
- Figur 1: eine schematische Schnittansicht eines erfindungsgemäßen Metall/Kunststoff-Gleitlagerverbundwerkstoffs;
- Figur 2: Messergebnisse des Reibwerts von aus erfindungsgemäßen Gleitlagerverbundwerkstoffen gefertigten Gleitlagerelementen; und
- Figur 3: verdeutlicht die Wicklungsrichtung zur Bildung von Kohlenstoffnanoröhrchen ausgehend von einatomigen hexagonalen Kohlenstofflagen.

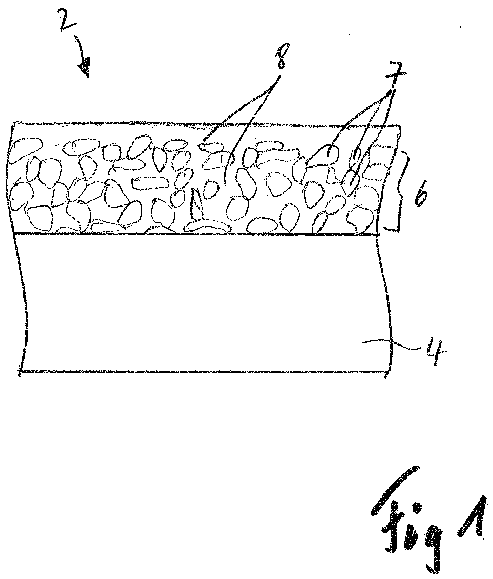

Figur 1 zeigt eine schematische Schnittansicht eines erfindungsgemäßen Gleitlagerverbundwerkstoffs 2 mit einer metallischen Stützschicht 4, typischerweise aus Stahl, und mit einer porösen Trägerschicht 6. Die poröse Trägerschicht 6 ist gebildet von einer Sinterschicht aus metallischen Partikeln 7 auf Bronzebasis. Die Partikel der Trägerschicht 6 bilden dabei zusammenhängende makroskopische Hohlräume (die aber nicht maßstabsgetreu dargestellt sind), in welche ein Gleitschichtmaterial 8 auf Polymerbasis einimprägniert ist. Das Gleitschichtmaterial 8 füllt dabei die Poren der Trägerschicht im Wesentlichen vollständig aus. Die Polymerbasis des Gleitschichtmaterials 8 beruht auf PVDF oder den übrigen eingangs genannten fluorfreien Polymeren im eingangs definierten Sinn, wobei PPA und PEEK bevorzugt sind. Das Gleitschichtmaterial 8 umfasst des Weiteren Füllstoffe, die in der matrixbildenden Polymerkomponente aufgenommen sind. In erfinderischer Weise umfasst das Gleitschichtmaterial 8 zwischen 0,1 und 15 Masse-% Kohlenstoff-Nanoröhrchen der eingangs beschriebenen Art, die aber in der Zeichnung nicht dargestellt sind. Weitere Füllstoffe neben Kohlenstoff-Nanoröhrchen können sich als vorteilhaft erweisen und sind ebenfalls nicht dargestellt. Es kommen hier insbesondere die eingangs genannten Füllstoffe in Frage. Verstärkungsstoffe, insbesondere Kohlenstofffasern, Festschmierstoffe, insbesondere Graphit oder hexagonales Bornitrid, und Metallsulfide kommen insbesondere in Frage.

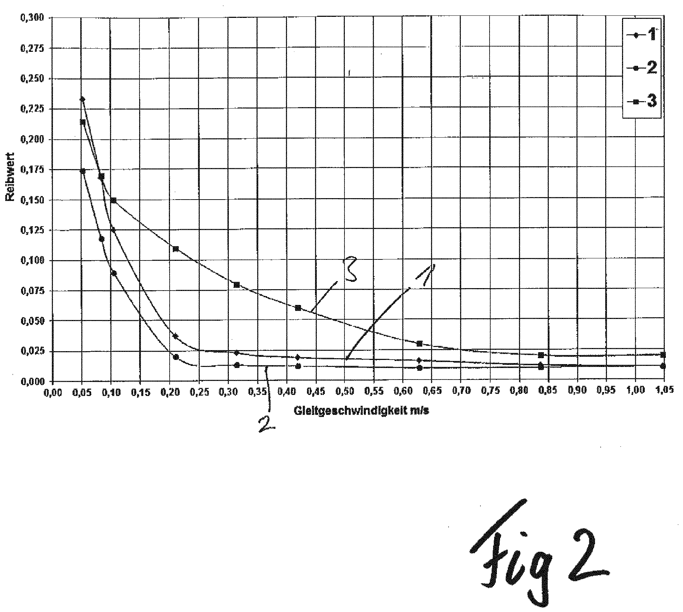

Figur 2 zeigt das Ergebnis von Reibwertmessungen an Gleitlagerelementen, die an Gleitlagerverbundwerkstoffen der nachfolgenden Zusammensetzung gemessen wurden. Die Gleitlagerverbundwerkstoffe umfassen eine metallische Stützschicht aus Stahl, eine poröse Trägerschicht der vorstehend beschriebenen Art und ein die Poren der Trägerschicht ausfüllendes Gleitschichtmaterial auf Polymerbasis. Die untersuchten Gleitlagerelemente unterscheiden sich hinsichtlich der Zusammensetzung des Gleitschichtmaterials. Bei dem Gleitlagerelement 1) besteht das Gleitschichtmaterial aus 100 Masse-% PPA ohne Füllstoffe. Bei 2) besteht das Gleitschichtmaterial aus 90 Masse-% PPA und 10 Masse-% Kohlenstoff-Nanoröhrchen. Bei dem Vergleichsbeispiel 3) aus 60 Masse-% PEEK, 10 Masse-% ZnS, 10 Masse-% Kohlenstofffasern, 10 Masse-% Graphit und 10 Masse-% TiO₂. Man erkennt eine Reduzierung des Reibwerts der Zusammensetzung 2) durch Zugabe von Kohlenstoff-Nanoröhrchen gegenüber der Zusammensetzung 1), was in höchstem Maße überraschend war.

## Patentansprüche

1. Metall/Kunststoff-Gleitlagerverbundwerkstoff (2) mit einer metallischen Stützschicht (4), insbesondere aus Stahl, mit einer porösen aus metallischen Partikeln (7) aufgesinterten Trägerschicht (6), und mit einem die Poren der Trägerschicht (6) ausfüllenden Gleitschichtmaterial (8) auf Basis fluorfreier Thermoplaste, insbesondere PPA, LCP, PEEK, PPS, PEI, PI, und mit die tribologischen Eigenschaften verbessernden Füllstoffen, wobei der Metall/Kunststoff-Gleitlagerverbundwerkstoff (2) dadurch erhalten ist, dass das Gleitschichtmaterial (8) mit seinen Füllstoffen in ein folienartiges Flachmaterial extrudiert wurde und dieses Flachmaterial in die Poren der porösen Trägerschicht durch einen kontinuierlichen Walzvorgang einimprägniert wurde, und wobei das Gleitschichtmaterial (8) zu 0,1 - 15 Masse-% mehrwandige Kohlenstoff-Nanoröhrchen mit einem Röhrenaußendurchmesser von ≤ 80 nm und einer Röhrenlänge von ≤ 10µm umfasst.

2. Gleitlagerverbundwerkstoff nach Anspruch 1, **dadurch gekennzeichnet, dass** der Röhrenaußendurchmesser der Kohlenstoff-Nanoröhrchen ≤ 70 nm, insbesondere ≤ 60 nm, insbesondere ≤ 50 nm ist.

3. Gleitlagerverbundwerkstoff nach Anspruch 1 oder 2, **dadurch gekennzeichnet, dass** die Röhrenlänge der Kohlenstoff-Nanoröhrchen ≤ 5 µm, insbesondere ≤ 3 µm, insbesondere ≤ 2 µm ist.

4. Gleitlagerverbundwerkstoff nach einem oder mehreren der vorstehenden Ansprüche, **dadurch gekennzeichnet, dass** das Gleitschichtmaterial (8) zu 0,1 - 12 Masse-%, insbesondere zu 0,5 - 10 Masse-%, insbesondere zu 1 - 8 Masse-% Kohlenstoff-Nanoröhrchen umfasst.

5. Gleitlagerverbundwerkstoff nach einem oder mehreren der vorstehenden Ansprüche, **dadurch gekennzeichnet, dass** die mehrwandigen Kohlenstoff-Nanoröhrchen 2 bis 20 Wandungen aufweisen.

6. Gleitlagerverbundwerkstoff nach einem oder mehreren der vorstehenden Ansprüche, **dadurch gekennzeichnet, dass** die Kohlenstoff-Nanoröhrchen in arm chair Wicklungsrichtung (n=m), in zig-zag Orientierung (n, m=0) oder chiral (n,m beliebig) gewickelt sind.

7. Gleitlagerverbundwerkstoff nach einem oder mehreren der vorstehenden Ansprüche, **dadurch gekennzeichnet, dass** die Wandungen der mehrwandigen Kohlenstoff-Nanoröhrchen dieselbe durch n und m beschriebene Wicklungsrichtung aufweisen.

8. Gleitlagerverbundwerkstoff nach einem oder mehreren der vorstehenden Ansprüche, **dadurch gekennzeichnet dass** die Kohlenstoff-Nanoröhrchen in Richtung der gleitenden Beanspruchung orientiert sind.

9. Gleitlagerverbundwerkstoff nach einem oder mehreren der vorstehenden Ansprüche, **dadurch gekennzeichnet, dass** das Gleitschichtmaterial (8) auf PEEK- oder PPA-Basis ausgebildet ist.

10. Gleitlagerverbundwerkstoff nach einem oder mehreren der vorstehenden Ansprüche, **dadurch gekennzeichnet, dass** das Gleitschichtmaterial (8) zu 1 - 40 Masse-%, insbesondere zu 1 - 30 Masse-%, insbesondere 1 - 25 Masse-%, insbesondere 5 - 25 Masse-%, insbesondere 10 - 25 Masse-% weitere Füllstoffe umfasst.

11. Gleitlagerverbundwerkstoff nach Anspruch 10, dass die weiteren Füllstoffe Verstärkungsstoffe umfassen, wie insbesondere C-Fasern, Glasfasern, Polyamidfasern wie Aramid; und/oder Festschmierstoffe, wie insbesondere PTFE, ZnS, BaSO₄, Graphit, Ruß, hexagonales Bornitrid; und/oder Metallsulfide, wie MoS₂, SnS₂,WS₂; und/oder Kunststoffpartikel, wie insbesondere Aramid PPTA-, PPSO₂-, PI- und PAI-Partikel, Polyarcylatpartikel PAR, PBA, PBI; und/oder Metalloxide, wie insbesondere Fe₂O₃, Al₂O₃, SiO₂, TiO₂, CuO, MgO, ZnO; und/oder Hartstoffe wie keramische Partikel, wie insbesondere SiC, Si₃N₄, BC, kubisches Bornitrid; und/oder Fluoride, wie insbesondere CaF₂, NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente, wie insbesondere Mischphasenoxidpigmente, nämlich Co-Al, Cr-Sb-Ti, Co-Ti, Fe-Al oder Co-Cr.

12. Gleitlagerverbundwerkstoff nach Anspruch 10 oder 11, **dadurch gekennzeichnet, dass** die weiteren Füllstoffe Verstärkungsstoffe, insbesondere Kohlenstofffasern, umfassen.

13. Gleitlagerverbundwerkstoff nach einem der Ansprüche 10 bis 12, **dadurch gekennzeichnet, dass** die weiteren Füllstoffe Festschmierstoffe, insbesondere Graphit oder hexagonales Bornitrid, umfassen.

14. Gleitlagerverbundwerkstoff nach einem der Ansprüche 10 bis 13, **dadurch gekennzeichnet, dass** die weiteren Füllstoffe Metallsulfide, insbesondere MoS₂ oder ZnS, umfassen.

15. Gleitlagerverbundwerkstoff nach einem oder mehreren der vorstehenden Ansprüche, **dadurch gekennzeichnet, dass** das Gleitschichtmaterial (8) einen Überstand über die poröse Trägerschicht bildet, insbesondere einer Dicke von 5 - 30 µm oder einer Dicke von 30 - 80 µm, oder einer Dicke von ≥ 80µm, insbesondere von 80 - 150 µm.

## Claims

1. Composite metal/plastics material (2) for slide bearings, having a metallic backing layer (4) in particular of steel, having, sintered thereonto, a porous liner layer (6) of metallic particles (7), and having a slide-layer material (8) which fills the pores of the liner layer (6) and is based on fluorine-free thermoplastics, and in particular PPA, LCP, PEEK, PPS, PEI, PI, and having fillers which improve the tribological properties, wherein the composite metal/plastics material (2) for slide bearings is obtained by having extruded the slide-layer material (8), together with its fillers, into a film-like flat material and having impregnated this flat material into the pores of the porous liner layer by a continuous rolling process, and wherein 0.1 - 15 mass-% of the slide-layer material (8) comprises multi-walled carbon nanotubes of an outside diameter of ≤ 80 nm and of a length of ≤ 10 µm.

2. Composite material for slide bearings according to claim 1, **characterised in that** the outside diameter of the carbon nanotubes is ≤ 70 nm, and in particular ≤ 60 nm, and in particular ≤ 50 nm.

3. Composite material for slide bearings according to claim 1 or 2, **characterised in that** the length of the carbon nanotubes is ≤ 5 µm, and in particular ≤ 3 µm, and in particular ≤ 2 µm.

4. Composite material for slide bearings according to one or more of the preceding claims, **characterised in that** 0.1 - 12 mass-%, and in particular 0.5 - 10 mass-%, and in particular 1 - 8 mass-% of the slide-layer material (8) comprises carbon nanotubes.

5. Composite material for slide bearings according to one or more of the preceding claims, **characterised in that** the multi-walled carbon nanotubes have 2 to 20 walls.

6. Composite material for slide bearings according to one or more of the preceding claims, **characterised in that** the carbon nanotubes are rolled in an armchair direction of rolling (n=m), in a zig-zag orientation (n, m=0) or at the chiral angle (n,m as appropriate).

7. Composite material for slide bearings according to one or more of the preceding claims, **characterised in that** the walls of the multi-walled carbon nanotubes have the same direction of rolling, as defined by n and m.

8. Composite material for slide bearings according to one or more of the preceding claims, **characterised in that** the carbon nanotubes are oriented in the direction in which the sliding stress is applied.

9. Composite material for slide bearings according to one or more of the preceding claims, **characterised in that** the slide-layer material (8) is formed on the basis of PEEK or PPA.

10. Composite material for slide bearings according to one or more of the preceding claims, **characterised in that** 1 - 40 mass-%, and in particular 1 - 30 mass-%, and in particular 1 - 25 mass-%, and in particular 5 - 25 mass-%, and in particular 10 - 25 mass-% of the slide-layer material (8) comprises further fillers.

11. Composite material for slide bearings according to claim 10, **characterised in that** the further fillers comprise reinforcing materials, such in particular as carbon fibres, glass fibres, polyamide fibres such as aramid; and/or solid lubricants, such in particular as PTFE, ZnS, BaSO₄, graphite, soot, hexagonal boron nitride; and/or metal sulphides, such as MoS₂, SnS₂, WS₂; and/or plastics particles, such in particular as aramid PPTA, PPSO₂, PI and PAI particles, polyacrylate particles of PAR PBA, PBI; and/or metal oxides, such in particular as Fe₂O₃, Al₂O₃, SiO₂, TiO₂, CuO, MgO, ZnO; and/or hard materials such as ceramic particles, such in particular as SiC, Si₃N₄, BC, cubic boron nitride; and/or fluorides, such in particular as CaF₂, NaF, AlF₃; and/or sheet silicates, such in particular as kaolin, mica, wollastonite, talc, silica; and/or fine powdered metals, such in particular as bronze and bismuth; and/or pigments, such in particular as mixed-phase oxide pigments, namely Co-Al, Cr-Sb-Ti, Co-Ti, Fe-Al or Co-Cr.

12. Composite material for slide bearings according to claim 10 or 11, **characterised in that** the further fillers comprise reinforcing materials, and in particular carbon fibres.

13. Composite material for slide bearings according to one of claims 10 to 12, **characterised in that** the further fillers comprise solid lubricants, and in particular graphite or hexagonal boron nitride.

14. Composite material for slide bearings according to one of claims 10 to 13, **characterised in that** the further fillers comprise metal sulphides, and in particular MoS₂ or ZnS.

15. Composite material for slide bearings according to one or more of the preceding claims, **characterised in that** the slide-layer material (8) forms a projection above the porous liner layer, in particular of a thickness of 5 - 30 µm or of a thickness of 30 - 80 µm, or of a thickness of ≥ 80 µm and in particular of 80 - 150 µm.

## Revendications

1. Matériau de palier lisse composite métal/plastique (2) avec une couche de support métallique (4), en particulier en acier, avec une couche d'appui poreuse (6) frittée à partir de particules métalliques (7) et avec un matériau de couche de glissement (8) remplissant les pores de la couche de support (6) à base de thermoplastique exempt de fluor, en particulier de PPA, de LCP, de PEEK, de PPS, de PEI, de PI, et avec des charges améliorant les propriétés tribologiques, dans lequel le matériau de palier lisse composite métal/plastique (2) est obtenu en ayant le matériau de couche de glissement (8) qui a été extrudé avec ses charges en un matériau plat en forme de feuille et cette feuille qui a imprégné les pores de la feuille d'appui poreuse par un processus de laminage continu, et dans lequel le matériau de palier lisse (8) comporte 0,1 à 15% en masse de nanotubes de carbone à parois multiples ayant un diamètre extérieur de tube ≤ 80 nm et une longueur de tube de ≤ 10 µm.

2. Matériau de palier lisse composite selon la revendication 1, **caractérisé en ce que** le diamètre extérieur de tube des nanotubes de carbone est ≤ 70 nm, en particulier ≤ 60 nm, en particulier ≤ 50nm.

3. Matériau de palier lisse composite selon la revendication 1 ou 2, **caractérisé en ce que** la longueur de tube des nanotubes de carbone est ≤ 5 µm, en particulier ≤ 3 µm, en particulier ≤ 2 µm.

4. Matériau de palier lisse composite selon une ou plusieurs des revendications précédentes, **caractérisé en ce que** le matériau de couche de glissement (8) comporte de 0,1 à 12% en masse, en particulier de 0,5 à 10% en masse, en particulier de 1 à 8% en masse de nanotubes de carbone.

5. Matériau de palier lisse composite selon une ou plusieurs des revendications précédentes, **caractérisé en ce que** les nanotubes de carbone à parois multiples ont de 2 à 20 parois.

6. Matériau de palier lisse composite selon une ou plusieurs des revendications précédentes, **caractérisé en ce que** les nanotubes de carbone sont enroulés dans la direction d'enroulement d'accoudoir de fauteuil (n = m), selon une orientation en zigzag (n, m = 0) ou chirale (n, m, au choix).

7. Matériau de palier lisse composite selon une ou plusieurs des revendications précédentes, **caractérisé en ce que** les parois des nanotubes de carbone à parois multiples présentent la même direction d'enroulement indiquée par n et m.

8. Matériau de palier lisse composite selon une ou plusieurs des revendications précédentes, **caractérisé en ce que** les nanotubes de carbone sont orientés dans la direction de la contrainte de glissement.

9. Matériau de palier lisse composite selon une ou plusieurs des revendications précédentes, **caractérisé en ce que** le matériau de couche de glissement est formé à base de PEEK ou de PPA.

10. Matériau de palier lisse composite selon une ou plusieurs des revendications précédentes, **caractérisé en ce que** le matériau de couche de glissement (8) comporte de 1 à 40 % en masse, en particulier de 1 à 30 % en masse, en particulier de 1 à 25 % en masse, en particulier de 5 à 25 % en masse, en particulier 10 à 25 % en masse de charges supplémentaires.

11. Matériau de palier lisse composite selon la revendication 10, **caractérisé en ce que** les charges supplémentaires comprennent des matériaux de renforcement, en particulier des fibres en C, des fibres de verre, des fibres de polyamide telles que de l'aramide; et/ou des lubrifiants solides, comme en particulier PTFE, ZnS, BaSO₄, graphite, noir de carbone, nitrure de bore hexagonal; et/ou des sulfures de métal tels que MoS₂, SnS₂, WS₂; et/ou des particules de plastique, en particulier des particules d'aramide PPTA, PPSO₂, PI et PAI, des particules de polyacrylate PAR, PBA, PBI; et/ou des oxydes de métal, en particulier Fe₂O₃, Al₂O₃, SiO₂, TiO₂, CuO, MgO, ZnO; et/ou des matériaux durs tels que des particules de céramique, comme en particulier SiC, Si₃N₄, BC, nitrure de bore cubique; et/ou des fluorures, comme en particulier CaF₂, NaF, AlF₃; et/ou des silicates en couche, en particulier du kaolin, du mica, de la wollastonite, du talc, de l'acide silicique; et/ou des poudres fines de métal, comme en particulier du bronze et du bismuth; et/ou des pigments, comme en particulier des pigments d'oxydes en phase mixte, à savoir Co-Al, Cr-Sb-Ti, Co-Ti, Fe-Al ou Co-Cr.

12. Matériau de palier lisse composite selon la revendication 10 ou 11, **caractérisé en ce que** les charges supplémentaires comprennent des matériaux de renforcement, en particulier les fibres de carbone.

13. Matériau de palier lisse composite selon l'une des revendications 10 à 12, **caractérisé en ce que** les charges supplémentaires comprennent des lubrifiants solides, en particulier du graphite ou du nitrure de bore hexagonal.

14. Matériau de palier lisse composite selon l'une des revendications 10 à 13, **caractérisé en ce que** les charges supplémentaires comprennent des sulfures de métal, en particulier du MoS₂ ou du ZnS.

15. Matériau de palier lisse composite selon une ou plusieurs des revendications précédentes, **caractérisé en ce que** le matériau de couche glissement (8) forme un surnageant sur la couche d'appui poreuse, en particulier une épaisseur de 5 à 30 µm ou une épaisseur de 30 à 80 µm, ou une épaisseur ≥ 80 µm, en particulier de 80 à 150 µm.
